(19) **Europäisches Patentamt / European Patent Office / Office européen des brevets**

(11) **EP 3 848 996 B1**

(12) **EUROPEAN PATENT SPECIFICATION**

(45) Date of publication and mention of the grant of the patent:
**07.06.2023 Bulletin 2023/23**

(21) Application number: **19864951.9**

(22) Date of filing: **19.09.2019**

(51) International Patent Classification (IPC):
**H01M 50/417** (2021.01)    **H01M 10/12** (2006.01)
**H01M 50/411** (2021.01)    **H01M 50/403** (2021.01)
**H01M 50/431** (2021.01)    **H01M 50/446** (2021.01)
**H01M 50/443** (2021.01)    **H01M 50/489** (2021.01)
**H01M 50/491** (2021.01)

(52) Cooperative Patent Classification (CPC):
**H01M 50/417; H01M 10/12; H01M 50/403;**
**H01M 50/411; H01M 50/431; H01M 50/443;**
**H01M 50/446; H01M 50/489; H01M 50/491;**
H01M 2220/20; Y02E 60/10; Y02P 70/50

(86) International application number:
**PCT/JP2019/036654**

(87) International publication number:
**WO 2020/066808 (02.04.2020 Gazette 2020/14)**

(54) **LEAD-ACID BATTERY**

BLEI-SÄURE-AKKUMULATOR

BATTERIE AU PLOMB-ACIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2018 JP 2018180162**

(43) Date of publication of application:
**14.07.2021 Bulletin 2021/28**

(73) Proprietor: **GS Yuasa International Ltd.**
**Kisshoin, Minami-ku,**
**Kyoto-shi, Kyoto 601-8520 (JP)**

(72) Inventors:
• **ITO, Etsuko**
**Kosai-shi, Shizuoka 431-0452 (JP)**

• **ANDO, Kazunari**
**Kosai-shi, Shizuoka 431-0452 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
WO-A1-2015/079631    JP-A- 2007 106 992
JP-A- 2013 542 558    US-A1- 2016 028 060
US-A1- 2018 233 783

**Description**

TECHNICAL FIELD

The present invention relates to a lead-acid battery.

BACKGROUND ART

A lead-acid battery is used in various applications in addition to in-vehicle and industrial applications. The lead-acid battery includes a positive electrode plate, a negative electrode plate, a separator interposed therebetween, and an electrolyte solution. The separator of the lead-acid battery is required to have various performances.
For example, Patent Document 1 proposes a separator for flooded-type lead-acid battery. The separator includes a rib-attached microporous film obtained by integrally molding a melt-mixed product obtained by melt-mixing a raw material composition mainly composed of a polyolefin resin, an inorganic powder, and a plasticizer, with a film-like product obtained by projecting a plate contacting rib on one surface of a flat sheet according to molding processing, and then removing a part of the plasticizer. The separator satisfies all of the following conditions: when a portion that does not perpendicularly bite the film surface at a boundary line between the flat sheet and the plate contacting main rib (the base line of the rib) in the rib-attached microporous film is taken as a base part, (1) the void ratio of the base part is 55 to 75%, and the void ratio of the rib part is 0.8 times or less of that of the base part; (2) the average pore diameter of the base part is 0.02 to 0.2 $\mu$m, and the average pore diameter of the rib part is 0.8 times or less of that of the base part; and (3) the maximum pore diameter of the base part is 0.3 to 0.8 $\mu$m, and the maximum pore diameter of the rib part is 0.8 times or less of that of the base part.
From the viewpoint of reduction in the size and weight, improvement in performance, and long life, and the like of the lead-acid battery, reduction in the resistance of the separator has been also studied.
Patent Document 2 proposes a separator for storage batteries. The separator includes a microporous film obtained by molding a raw material composition mainly composed of a polyolefin resin, an inorganic powder, and a plasticizer into a sheet shape while heating, melting, and mixing the raw material composition, and removing a part or all of the plasticizer. The inorganic powder has a pH of 6.5 or less.
Patent Document 3 proposes a lead-acid battery including a negative electrode plate including an organic expander. The negative electrode plate is encapsulated in a bag-shaped separator made of a polyethylene sheet having micropores containing 7 to 20% of a mineral oil. In Patent Document 3, a battery A5 of Comparative Example in which the amount of the mineral oil is 25% by weight tends to have a shorter discharge duration time before and after being left than that of other battery. The reason for the tendency can be inferred to be that the amount of the mineral oil is excessive, which causes increased resistance of the bag-shaped separator.

PRIOR ART DOCUMENTS

PATENT DOCUMENTS

Patent Document 1: JP-A-2013-211115 (Claim 1)
Patent Document 2: JP-A-2005-268006 (Claim 1)
Patent Document 3: JP-A-2006-114313 (Claim 1, Paragraph [0033])

DISCLOSURE OF THE INVENTION

PROBLEMS TO BE SOLVED BY THE INVENTION

The separator may contain an oil as a pore-forming additive. When the separator contains the oil, the resistance of the separator increases. If the oil is removed from the separator, the resistance of the separator decreases, but the high-temperature overcharge life of the lead-acid battery is shortened. As in Patent Document 2, if the pH of the inorganic powder contained in the separator is set to 6.5 or less, the wettability of the separator with respect to an electrolyte solution is considered to be improved to some extent. However, even if the pH of the inorganic powder contained in the separator is set to 6.5 or less, it is difficult to sufficiently reduce the resistance of the separator depending on charge-discharge conditions.

MEANS FOR SOLVING THE PROBLEMS

One aspect of the present invention relates to a lead-acid battery including: a positive electrode plate; a negative electrode plate; and a separator interposed between the positive electrode plate and the negative electrode plate, wherein: the separator contains a polyolefin and an oil; the separator has a pore volume (A) of 0.80 $cm^3$/g or more and 1.55 $cm^3$/g or less and a pore surface area (B) of 65 $cm^2$/g or more and 116 $cm^2$/g or less; and a product (C) of the pore volume (A) and the pore surface area (B) is 92 or more and 178 or less.

ADVANTAGES OF THE INVENTION

The excellent high-temperature overcharge life of the lead-acid battery can be secured while the resistance of the separator is suppressed to a low level.

BRIEF DESCRIPTION OF THE DRAWINGS

Fig. 1 is a schematic plan view of the external appearance of a bag-shaped separator according to an embodiment of the present invention.

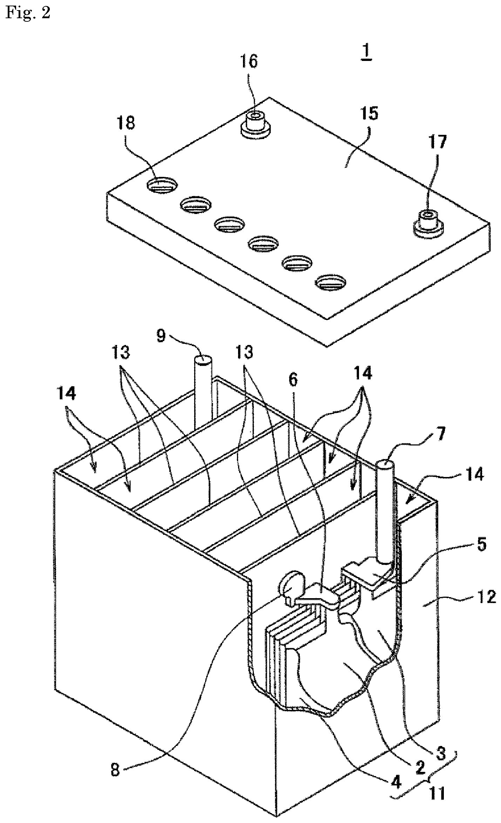

Fig. 2 is a perspective view with a part cut away, showing the external appearance and internal structure of a lead-acid battery according to an embodiment of the present invention.
Fig. 3 is a graph showing the Log differential pore volume distribution of a separator according to an embodiment of the present invention.
Fig. 4 is a graph showing the Log differential pore volume distribution of a conventional separator.

MODE FOR CARRYING OUT THE INVENTION

A lead-acid battery of the present invention includes a positive electrode plate, a negative electrode plate, and a separator interposed between the positive electrode plate and the negative electrode plate. The separator contains a polyolefin and an oil. The separator has a pore volume (A) of 0.80 $cm^3$/g or more and 1.55 $cm^3$/g or less and a pore surface area (B) of 65 $cm^2$/g or more and 116 $cm^2$/g or less. A product (C) of the pore volume (A) and the pore surface area (B) is 92 or more and 178 or less.
In general, the separator may contain an oil as a pore-forming additive or an additive or the like. If the oil is contained in the separator, the insulating oil block pores, which tends to cause increased resistance of the separator. If the resistance of the separator becomes too large, the characteristics of the lead-acid battery such as startability deteriorate. If the oil is removed from the separator, the diffusibility of an electrolyte solution is improved, whereby the resistance of the separator is reduced, but the oxidative deterioration of the separator in a high-temperature overcharge test becomes remarkable, so that the life of the lead-acid battery is shortened.
In the present invention, in the separator containing the polyolefin and the oil, the pore volume (A) and the pore surface area (B) are adjusted, and the product (C) of the pore volume (A) and the pore surface area (B) is controlled within a predetermined range. As a result, the pore structure of the separator is optimized to hold the oil in the separator, and the diffusivity of the electrolyte solution is improved to provide reduced resistance of the separator. The oil held in the separator suppresses the oxidative deterioration of the polyolefin constituting the separator even when the lead-acid battery is overcharged at a high temperature, whereby an excellent high-temperature overcharge life is achieved. The separator has low resistance, whereby the startability of the lead-acid battery is improved.
The product (C) is a numerical value related to the diffusivity of the electrolyte solution, and the unit thereof is $cm^5$/$g^2$. If the product (C) is less than 92, the diffusibility of the electrolyte solution in the separator cannot be sufficiently secured, so that the resistance of the separator increases. If the product (C) exceeds 178, the diffusibility of the electrolyte solution becomes too high, so that the oxidative deterioration of the separator becomes remarkable. The physical strength of the separator is weakened, so that the separator is apt to be damaged due to the influence of the oxidative deterioration of the separator during the high-temperature overcharge test. As a result, the high-temperature overcharge life is shortened.
The pore volume (A) and the pore surface area (B) are measured for an unused separator or a separator taken out from a lead-acid battery in the initial stage of use, by a mercury intrusion method.
Herein, the battery in the initial stage of use refers to a battery that has not been used for a long time and has hardly deteriorated.
The content of the oil contained in the separator correlates with the pore volume (A). Meanwhile, even when the separator contains a certain amount of oil, the pore structure causes the oil to escape from the separator during charge and discharge; the diffusivity of the electrolyte solution is too high; or the strength of the separator is low, so that the high-temperature overcharge life may be shortened. In the present invention, the pore surface area (B) and the product (C) are controlled within the above ranges in addition to the pore volume (A), whereby the escaping of the oil during charge and discharge can be reduced, and the appropriate diffusivity of the electrolyte solution and the physical strength of the separator can be secured. That is, in the present invention, many small pores suitable for holding the oil and diffusing the electrolyte solution are formed in the separator. Such a pore structure is considered to make it possible to secure the excellent high-temperature overcharge life while suppressing the resistance of the separator to a low level.

More specifically, a sample obtained by cutting the separator into a size of 20 mm in length $\times$ 5 mm in width is measured for the pore volume (A) and the pore surface area (B) using a mercury porosimeter (Autopore IV9510, manufactured by Shimadzu Corporation). A pressure range for measurement is set to 4 psia ($\approx$ 27.6 kPa) or more and 60,000 psia ($\approx$ 414 MPa) or less. As pore distribution, a range of a pore diameter of 0.01 $\mu$m or more and 50 $\mu$m or less is used.

The sample for measurement is produced by cutting an unused separator or a separator taken out from a disassembled lead-acid battery, cleaned, and dried to the above size. The separator taken out from the lead-acid battery is cleaned and dried in the following procedure. The separator taken out from the lead-acid battery is immersed in pure water for 1 hour to remove sulfuric acid in the separator. The separator is then taken out from a liquid in which the separator has been immersed, and allowed to stand for 16 hours or more in a 25°C environment for drying. When the separator is taken out from the lead-acid battery, the separator is taken out from a fully charged lead-acid battery.

Herein, the fully charged state of the lead-acid battery is set by the definition of JIS D 5301: 2006. More specifically, the fully charged state is a state where the lead-acid battery is charged at a current of 1/20 of a numerical value described in a rated capacity until a terminal voltage during charge measured every 15 minutes or a temperature-converted electrolyte solution density has a constant value three successive times. The lead-acid battery is charged in a state where the electrolyte solution of the lead-acid battery is filled to a specified liquid level.

The fully charged lead-acid battery is a fully charged formed lead-acid battery. The lead-acid battery may be fully charged immediately after formation or after a lapse of time from forming (for example, after formation, a lead-acid battery during use (preferably at the initial stage of use) may be fully charged).

The separator preferably contains pores having a pore diameter of 0.03 $\mu$m or less (hereinafter, referred to as first pores). The separator has the first pores having a small pore diameter, whereby the escaping of the oil from the separator during charge and discharge can be reduced, and the diffusivity of the electrolyte solution can be secured to some extent. The pore volume of the first pores (hereinafter referred to as pore volume A1) is preferably 0.20 cm$^3$/g or more. A ratio of the pore volume A1 of the first pores to the pore volume A (= A1/A $\times$ 100) is preferably 21% or more. When the pore volume A1 and/or the ratio of A1 is within such ranges, the high diffusivity of the electrolyte solution can be secured while the high holding properties of the oil during charge and discharge are secured.

The content of the oil in the separator is preferably 13% by mass or more. In this case, the effect of suppressing the oxidative deterioration of the separator is further improved, whereby the excellent high-temperature overcharge life is likely to be secured.

The content of the oil in the separator is a value measured for an unused separator or a separator taken out from the lead-acid battery, cleaned, and dried in the same procedure as described above.

The content of the oil is calculated from the unused separator or the above dried separator in the following procedure. First, 0.5 g (initial sample mass: $m_0$) of a sample obtained by cutting an unused or dried separator into a strip is weighed and collected. When the separator includes a rib part, the sample is collected from a region including no rib part. The sample is placed in a glass beaker having an appropriate size, and 50 mL of n-hexane is added into the glass beaker. Next, the oil content contained in the sample is eluted into n-hexane by applying ultrasonic waves to the sample together with the beaker for about 30 minutes. The sample is taken out, dried in an air atmosphere at room temperature (temperature: 20°C or higher and 35°C or lower), and then weighed to obtain a mass ($m_1$) of the sample from which the oil has been removed. The content of the oil is calculated by the following formula.

$$\text{Content of Oil (\% by Mass)} = (m_0 - m_1)/m_0 \times 100$$

The separator may contain inorganic particles. The separator contains the inorganic particles, which is likely to optimize the pore structure in the separator, whereby the pore volume A, the pore surface area B, and the product C can be relatively easily adjusted within the above ranges. As a result, the low resistance of the separator and the high-temperature overcharge life are likely to be balanced.

The lead-acid battery of the present invention has separator resistance suppressed to a low level, whereby the lead-acid battery is suitable for applications requiring a large current. When a vehicle is started, a large current is first required. Therefore, the lead-acid battery is particularly suitably used for starting the vehicle.

Hereinafter, specific example of the separator for lead-acid battery according to an embodiment of the present invention will be described with reference to the drawings. However, the present invention is not limited to the following embodiment.

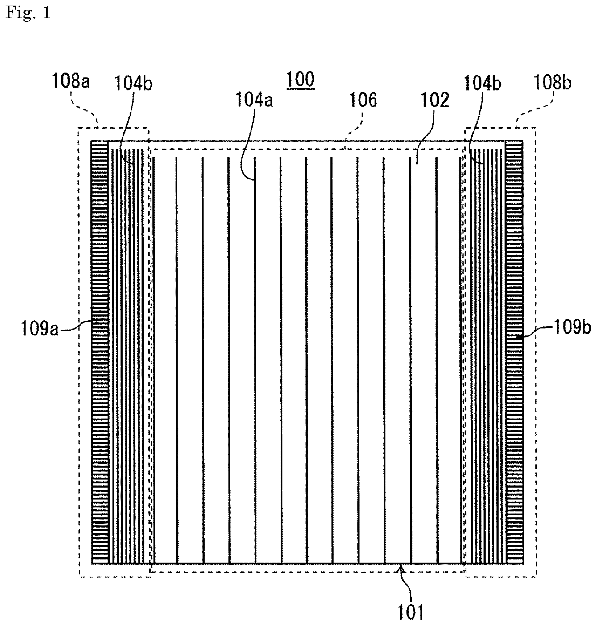

Fig. 1 is a schematic plan view showing the external appearance of a bag-shaped separator 100 according to an embodiment of the present invention. The bag-shaped separator 100 has a shape in which a sheet-shaped microporous film having an area twice that of a bag is folded in half at a crease 101. That is, the sheet-shaped microporous film is divided into a first portion and a second portion facing each other by the crease 101.

Each of the first portion and the second portion includes a main part 106 facing an electrode plate, and end parts 108a and 108b provided on both sides of the main part 106 and the crease 101. Most of the main part 106 and the end parts 108a and 108b are composed of a base part 102. A plurality of main ribs 104a are provided on the outer surface of the base part 102 of the main part 106, and a plurality of mini ribs 104b having a protrusion height smaller than that of the main ribs 104a are provided on the outer surface of the base part 102 of the end parts 108a and 108b.

The main ribs 104a and the mini ribs 104b have an effect of improving the diffusivity of the electrolyte solution in the vicinity of the electrode plate, for example.

Neither the main ribs 104a nor the mini ribs 104b are indispensable. At least one of the main ribs 104a and the mini ribs 104b may be provided on the inner surface of the base part 102 (bag), or may be provided on both the inner surface and the outer surface.

The end parts 108a and 108b of each of the first portion and the second portion respectively include welded parts 109a and 109b. In the welded parts 109a and 109b, the first portion and the second portion facing each other are joined by welding.

The thickness of the base part 101 is, for example, 0.15 mm or more and 0.25 mm or less, or 0.15 mm or more and 0.20 mm or less. The thickness of the base part is obtained by measuring and averaging the thicknesses of the base part at five optionally selected points in the cross-sectional photograph of the separator.

The height of the main rib 104a is, for example, 0.4 mm or more and 0.8 mm or less. The height of the mini rib 104b is, for example, 0.05 mm or more and 0.3 mm or less. The height of each rib is obtained by averaging the heights of the ribs from the base part measured at 10 optionally selected points on one main surface of the base part.

In order to measure the thickness of the base part and the height of each rib, the unused separator or the separator taken out from the lead-acid battery, cleaned, and dried in the above-described procedure is used.

The embodiment shown in Fig. 1 is only one aspect of the present invention. For example, a non-bag-shaped sheet-shaped separator may be sandwiched between the negative electrode plate and the positive electrode plate.

The separator is obtained, for example, by extrusion-molding a resin composition containing a polyolefin, a pore-forming additive, and a penetrant (surfactant) into a sheet, and then removing the pore-forming additive. By removing at least a part of the pore-forming additive, micropores are formed in a polyolefin matrix. The resin composition may further contain inorganic particles.

As the polyolefin, for example, a polymer containing at least ethylene and/or propylene as a monomer unit is preferable. As the polyolefin, for example, a copolymer containing polyethylene, polypropylene, ethylene and/or propylene as a monomer unit (for example, an ethylenepropylene copolymer or the like) is more preferable, and polyethylene is particularly preferable.

As inorganic particles, for example, ceramic particles made of silica, alumina, and titania and the like are preferable.

The amount of the inorganic particles in the separator is, for example, 100 parts by mass or more and 300 parts by mass or less, and may be 120 parts by mass or more and 200 parts by mass or less, per 100 parts by mass of the polyolefin.

The content of the inorganic particles in the separator is, for example, 40% by mass or more and 80% by mass or less, and may be 50% by mass or more and 75% by mass or less, or 50% by mass or more and 70% by mass or less.

The content of the inorganic particles in the separator is obtained in the following procedure using the separator taken out from the lead-acid battery, cleaned, and dried in the above-described procedure as a measurement sample. The measurement sample is accurately weighed, then placed in a platinum crucible, and heated with a bunsen burner until no white smoke is emitted. Next, in an electric furnace (in an oxygen flow, 550°C), the sample is heated for about 1 hour for ashing, and the ashing product is weighed. A ratio of the mass of the ashing product to the mass of the above measurement sample is calculated, and taken as the content (% by mass) of the above inorganic particles.

As the pore-forming additive, a liquid pore-forming additive such as an oil can be used. The pore-forming additives may be used alone, or two or more thereof may be used in combination. As the pore-forming additive, a liquid pore-forming additive and a solid pore-forming additive may be used in combination. As the liquid pore-forming additive, a mineral oil and a synthetic oil and the like are preferable. Examples of the liquid pore-forming additive include a paraffin oil and a silicone oil. Examples of the solid pore-forming additive include a polymer powder.

The amount of the pore-forming additive in the separator is, for example, 30 parts by mass or more and 60 parts by mass or less per 100 parts by mass of the polyolefin.

The content of the oil in the separator is, for example, 10% by mass or more, and preferably 13% by mass or more. When the content of the oil is within such a range, an excellent high-temperature overcharge life is likely to be secured. The content of the oil in the separator is, for example, 20% by mass or less, preferably 18.0% by mass or less, and more preferably 17.5% by mass or less. When the content of the oil is within this range, the separator has low resistance. These lower limit values and upper limit values can be optionally combined. The content of the oil in the separator is measured in the procedure described above.

The ribs may be formed in a sheet during extrusion molding, or may be formed by pressing a sheet with a roller having grooves corresponding to the ribs after the sheet is formed or after the pore-forming additive is removed.

The pore volume A of the separator is 0.80 $cm^3/g$ or more, and may be 1.0 $cm^3/g$ or more. If the pore volume A is less than 0.80 $cm^3/g$, the resistance of the separator is insufficiently reduced. The pore volume A of the separator is 1.55 $cm^3/g$ or less, and may be 1.2 $cm^3/g$ or less. If the pore volume A exceeds 1.55 $cm^3/g$, the physical strength of the separator weakens, which causes the separator to be broken during a high-temperature overcharge test, so that the high-temperature overcharge life is shortened. These lower limit values and upper limit values can be optionally combined.

The pore volume A can be adjusted by adjusting the affinity of the polyolefin with the pore-forming additive and/or the penetrant, selecting the type and/or particle size of the inorganic particles, adjusting the amount of the penetrant, and/or adjusting the amount of the pore-forming additive removed. In general, the pore volume A of the separator changes depending on the amount of the remaining pore-forming additive. If the amount of the pore-forming additive remaining in the separator is small, the number of pores in the separator is large, so that the resistance of the separator is low, but the durability of the separator at a high temperature deteriorates. Meanwhile, if a large amount of pore-forming additive remains in the separator, the number of pores in the separator is small, so that the resistance of the separator increases, but the durability of the separator at a high temperature is improved. Therefore, when the pore-forming additive is partially removed, the amount of the pore-forming additive removed is preferably controlled.

The pore surface area B of the separator is 65 $cm^2/g$ or more, and may be 70 $cm^2/g$ or more or 80 $cm^2/g$ or more. When the pore surface area B is less than 65 $cm^2/g$, the diffusivity of the electrolyte solution is low, so that the resistance of the separator is insufficiently reduced. The pore surface area B of the separator is 116 $cm^2/g$ or less, and may be 115 $cm^2/g$ or less. If the pore surface area B exceeds 116 $cm^2/g$, the diffusivity of the electrolyte solution becomes too high, so that the high-temperature overcharge life is shortened. These lower limit values and upper limit values can be optionally combined.

The product C of the pore volume A and the pore surface area B is 92 or more, and may be 95 or more or 100 or more. The product C is 178 or less, and may be 160 or less. These lower limit values and upper limit values can be optionally combined. The product C is within such a range, which makes it possible to achieve both the low resistance of the separator and the excellent high-temperature overcharge life.

The pore structure and the pore surface area B in the separator can be adjusted by adjusting the affinity between the polyolefin and the pore-forming additive or the penetrant, adjusting the dispersibility of the pore-forming additive, selecting the type or particle size of the inorganic particles, adjusting the type of the penetrant, adjusting the amount of the penetrant, or adjusting the amount of functional groups or atoms or the like present on the surface of the inorganic particles. For example, if the amount of -ONa groups on the surface of the inorganic particles is reduced (for example, if the content of Na in the separator is reduced to 1000 $\mu g/cm^3$ or less or 500 $\mu g/cm^3$ or less), the pore structure of the separator is likely to be controlled, although the reason is unclear. More specifically, in the Log differential pore volume distribution of the separator, a peak peculiar to a region of 0.03 $\mu m$ or less (preferably less than 0.03 $\mu m$ (for example, around 0.02 $\mu m$)) is observed. As a result, the total pore volume is increased by about 10% as compared with a conventional separator in which no clear peak is observed within such a range. Such a change in the pore volume distribution is inferred to be related to reduction in the resistance component of the separator. The amount of -ONa groups can be likely to be adjusted, whereby silica particles are preferably used as the inorganic particles.

The Log differential pore volume distribution of the separator is obtained from pore distribution measured as with the pore volume A and the pore surface area B.

If the content of Na in the inorganic particles is reduced, the content of Na in the separator also decreases. Therefore, if the content of Na in the separator taken out from the lead-acid battery is measured, the content of Na in the inorganic particles can be estimated to some extent. The content of Na in the separator is the content of Na ($\mu g$) per 1 $cm^3$ of the apparent volume of the separator.

The content of Na in the separator is measured by using the separator taken out from the lead-acid battery, cleaned, and dried in the above-described procedure as a measurement sample. The content of Na in the separator is obtained by analysis according to inductively coupled plasma emission spectroscopy (ICP-AES). Specifically, first, a measurement sample having an area of about 15 $cm^2$ is placed in a platinum crucible, and heated with a bunsen burner until no white smoke is emitted. Next, in an electric furnace (in an oxygen flow, 550°C), the sample is heated for about 1 hour for ashing. To the sample after ashing, 5 mL of a nitric acid aqueous solution having a concentration of 30% by mass is added, and 2 mL of a hydrofluoric acid aqueous solution having a concentration of 50% by mass is further added, followed by stirring, to completely dissolve the ash in the acid. Next, ion-exchanged water is added to the acid solution of the ash to adjust the volume, and the concentration of Na is then measured with an ICP emission spectrometer.

As a measuring apparatus, iCAP7400 manufactured by Thermo Fisher Scientific Co., Ltd. is used. The mass of the measurement sample and the amount of the acid to be used and the like may be appropriately changed depending on the content of Na contained in the separator.

As described above, in the lead-acid battery according to the present invention, the separator has an optimized pore structure, and can contain small pores (for example, first pores having a pore diameter of 0.03 $\mu$m or less (or less than 0.03 $\mu$m)). The first pores are formed in the separator, which is likely to achieve both the low resistance of the separator and the excellent high-temperature overcharge life.

If the pore volume A1 of the first pores is large, the oil is likely to be held, and the high diffusivity of the electrolyte solution is likely to be secured. The pore volume A1 of the first pores is preferably 0.20 $cm^3$/g or more, and more preferably 0.23 $cm^3$/g or more or 0.24 $cm^3$/g or more. For the same reason, the ratio of the pore volume A1 of the first pores to the pore volume A is preferably 21% or more, and more preferably 22% or more. The upper limit of the pore volume A1 of the first pores is not particularly limited as long as it is equal to or less than the upper limit of the pore volume A, and may be 1 $cm^3$/g or less or 0.5 $cm^3$/g or less. The upper limit of the ratio of the pore volume A1 to the pore volume A is not also particularly limited as long as it is 100% or less, and may be 50% or less or 30% or less. For each of the pore volume A1 and its ratio, the lower and upper limit values thereof can be optionally combined. The pore volume A1 is measured according to the case of the pore volume A using the range of the pore diameter of 0.03 $\mu$m or less (or less than 0.03 $\mu$m) in the pore distribution. By calculating the ratio of the measured value to the pore volume A, the ratio (%) of the pore volume A1 is obtained.

The surfactant as the penetrant may be either an ionic surfactant or a nonionic surfactant. The surfactants may be used alone, or two or more thereof may be used in combination.

The amount of the penetrant in the separator is, for example, 0.1 parts by mass or more and 10 parts by mass or less, per 100 parts by mass of the polyolefin, and may be 0.5 parts by mass or more and 5 parts by mass or less.

The content of the penetrant in the separator is, for example, 0.01% by mass or more and 10% by mass or less, and may be 0.1% by mass or more and 5% by mass or less.

The content of the penetrant in the separator is obtained in the following procedure using an unused separator or a separator taken out from the lead-acid battery, cleaned, and dried in the above-described procedure as a measurement sample. First, a measurement sample having an area of about 15 $cm^2$ is accurately weighed, and then dried at room temperature (temperature: 20°C or higher and 35°C or lower) in a reduced pressure environment lower than an atmospheric pressure environment for 12 hours or longer. The dried product is placed in a platinum cell, set in a thermogravimetric analyzer, and heated from room temperature to 800°C at a heating rate of 10 K/min. A weight decreased amount when the temperature is raised from room temperature to 250°C is taken as the mass of the penetrant. The ratio of the mass of the penetrant to the mass of the above measurement sample is calculated, and taken as the content of the above penetrant (% by mass). As the thermogravimetric analyzer, Γa5000IR manufactured by T.A. Instruments is used.

(Electrolyte Solution)

The electrolyte solution is an aqueous solution containing sulfuric acid. The electrolyte solution may contain Al ions and/or Na ions. The electrolyte solution may contain other additives. The electrolyte solution may be gelled as necessary.

When the electrolyte solution contains Al ions, penetration short circuit can be suppressed. The concentration of the Al ions in the electrolyte solution is, for example, 0.02 mol/L or more and 0.2 mol/L or less. The Al ions can be contained in the electrolyte solution, for example, by dissolving an aluminum compound (for example, an aluminum salt of an inorganic acid such as aluminum sulfate) in the electrolyte solution.

The concentration of the Al ions in the electrolyte solution is obtained by subjecting the electrolyte solution taken out from the fully charged formed lead-acid battery to ICP-AES atomic absorption spectrometry. More specifically, the electrolyte solution is weighed and collected from the lead-acid battery, and ion-exchanged water is added to adjust the volume. The concentration of the Al ions is then measured by an ICP emission spectrometer. As a measuring apparatus, iCAP7400 manufactured by Thermo Fisher Scientific Co., Ltd. is used.

The specific gravity of the electrolyte solution at 20°C in the fully charged formed lead-acid battery is, for example, 1.10 g/$cm^3$ or more and 1.35 g/$cm^3$ or less.

(Negative Electrode Plate)

The negative electrode plate of the lead-acid battery is composed of a negative electrode current collector and a negative electrode material. The negative electrode material is obtained by removing the negative electrode current collector from the negative electrode plate. The negative electrode current collector may be formed by casting lead (Pb) or a lead alloy, or may be formed by processing a lead or lead alloy sheet. Examples of the processing method include expanding processing and punching processing. If a negative electrode grid is used as the negative electrode current collector, the negative electrode material is likely to be supported, which is preferable.

The lead alloy used for the negative electrode current collector may be any of a Pb-Sb-based alloy, a Pb-Ca-based alloy, and a Pb-Ca-Sn-based alloy. The lead or the lead alloy may further contain at least one selected from the group consisting of Ba, Ag, Al, Bi, As, Se, and Cu and the like as an additive element.

The negative electrode material contains a negative electrode active material (lead or lead sulfate) having a capacity developed in an oxidation-reduction reaction. The negative electrode material may contain an expander, a carbonaceous material such as carbon black, and barium sulfate and the like, and may contain other additives as necessary.

An unformed negative electrode plate is usually produced by using a lead powder.

The negative electrode plate can be formed by filling a negative electrode current collector with a negative electrode paste, followed by curing and drying to produce an unformed negative electrode plate, and thereafter forming the unformed negative electrode plate. The negative electrode paste is produced by adding water and sulfuric acid to a lead powder, an organic expander, and as necessary, various additives, followed by mixing. The unformed negative electrode plate is preferably cured at a temperature higher than room temperature and a high humidity in a curing step.

The negative electrode plate can be formed by charging an element including an unformed negative electrode plate in a state where the element is immersed in an electrolyte solution containing sulfuric acid in the container of the lead-acid battery. However, the formation may be performed before the assembly of the lead-acid battery or the element. Spongy lead is produced by the formation.

(Positive Electrode Plate)

Examples of the positive electrode plate of the lead-acid battery include pasted type and clad type positive electrode plates.

The pasted type positive electrode plate includes a positive electrode current collector and a positive electrode material. The positive electrode material is held by the positive electrode current collector. In the pasted type positive electrode plate, the positive electrode material is obtained by removing the positive electrode current collector from the positive electrode plate. The positive electrode current collector may be formed in the same manner as in the negative electrode current collector, and can be formed by casting lead or a lead alloy or processing a lead or lead alloy sheet.

The clad type positive electrode plate includes a plurality of porous tubes, a spine inserted into each of the tubes, a positive electrode material filled in each of the tubes into which the spine is inserted, and a joint for connecting the plurality of tubes. In the clad type positive electrode plate, the positive electrode material is obtained by removing the tube, the spine, and the joint from the positive electrode plate.

The lead alloy used for the positive electrode current collector is preferably a Pb-Ca-based alloy and a Pb-Ca-Sn-based alloy in terms of corrosion resistance and mechanical strength. The positive electrode current collector may have lead alloy layers having different compositions, and a plurality of alloy layers may be provided. A Pb-Ca-based alloy or a Pb-Sb-based alloy is preferably used for the spine.

The positive electrode material contains a positive active material (lead dioxide or lead sulfate) that develops a capacity in an oxidation-reduction reaction. The positive electrode material may contain other additives as necessary.

The unformed pasted type positive electrode plate is obtained by filling a positive electrode current collector with a positive electrode paste, followed by curing and drying. Thereafter, the unformed positive electrode plate is formed. The positive electrode paste is prepared by mixing a lead powder, additives, water, and sulfuric acid.

The clad type positive electrode plate is formed by filling each of a plurality of tubes into which a spine is inserted with a lead powder or a slurry lead powder, and causing a joint to connect the tubes.

(Fiber Mat)

The lead-acid battery may further include a fiber mat interposed between the positive electrode plate and the negative electrode plate. The fiber mat contains a sheet-like fiber aggregate unlike the separator. As such a fiber aggregate, a sheet in which fibers insoluble in an electrolyte solution are entangled is used. Examples of the sheet include a non-woven fabric, a woven fabric, and a knitted fabric. For example, 60% by mass or more of the fiber mat is formed of fibers.

As the fiber, a glass fiber, a polymer fiber, and a pulp fiber and the like can be used. Among the polymer fiber, a polyolefin fiber is preferable.

Fig. 1 shows the external appearance of an example of a lead-acid battery according to an embodiment of the present invention.

A lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is closed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode shelf part 6 that connects the plurality of negative electrode plates 2 in parallel is connected to a through-connector 8, and a positive electrode shelf part 5 that connects the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode shelf part 6, and the through-connector 8 is connected to the positive electrode shelf part 5. The negative pole 9 is connected to the negative electrode terminal 16 disposed outside the lid 15. Each through-connector 8 passes through a through-hole provided in the partition 13, and connects the elements 11 of the cell chambers 14 adjacent to each other in series.

The lead-acid battery according to the above aspect has low separator resistance and an excellent high-temperature overcharge life. The resistance of the separator can be evaluated by evaluating the startability of the lead-acid battery. The startability and high-temperature overcharge life of the lead-acid battery are evaluated in the following procedure.

(1) Startability of Lead-Acid Battery

In accordance with JIS D 5301: 2006, a terminal voltage after 5 seconds from the start of discharge is measured in the following procedure, and the startability of the lead-acid battery is evaluated based on the terminal voltage. As the terminal voltage is higher, the startability is higher, and the resistance of the separator is lower.

(a) The lead-acid battery is placed in a cooling room at -15°C $\pm$ 1°C for at least 16 hours after the lead-acid battery is fully charged.
(b) After the temperature of an electrolyte solution in any one of cells in the center is confirmed to be -15°C $\pm$ 1°C, the lead-acid battery is discharged at a discharge current of 150 A until the terminal voltage drops to 6 V
(c) A terminal voltage after 5 seconds from the start of discharge is recorded.

(2) High-Temperature Overcharge Life

In the following procedure, a high-temperature overcharge durability test is performed to measure the life of the lead-acid battery.

(a) The lead-acid battery is placed in an air chamber at 75°C $\pm$ 3°C throughout the entire test period.
(b) The lead-acid battery is connected to a life test apparatus, to continuously repeat the following discharge and charge cycle. The discharge and charge cycle is taken as one life (1 cycle).

Discharge: 60 seconds $\pm$ 1 second at discharge current of 25.0 A $\pm$ 0.1 A
Charge: charge voltage 14.80 V $\pm$ 0.03 V (restricted current: 25.0A$\pm$ 0.1A) for 600 seconds $\pm$ 1 second

(c) During the test, the lead-acid battery is left for 56 hours every 480 cycles, and then continuously discharged at a rated cold cranking current of 390 A for 30 seconds, followed by recording a 30 second voltage at discharge. Then, the charge of (b) is performed. The discharge and the charge are also added to the number of lives (number of cycles).
(d) The end of the test is taken as a battery life when it is confirmed that a 30 second voltage at discharge measured in the test (c) is 7.2 V or less and does not rise again.

The rated cold cranking current is a measure of engine starting performance, and is a discharge current set such that the lead-acid battery is discharged at a temperature of -18°C $\pm$ 1°C and a 30 second voltage at discharge is 7.2 V or more.

EXAMPLES

Hereinafter, the present invention will be specifically described based on Examples and Comparative Examples, but the present invention is not limited to the following Examples.

<<Lead-Acid Batteries A1 to A12 and R1 to R14»

(1) Production of Negative Electrode Plate

Lead oxide, carbon black, barium sulfate, lignin, a reinforcing material (synthetic resin fiber), water, and sulfuric acid were mixed to prepare a negative electrode paste. The negative electrode paste was filled in a mesh part of an expanded grid made of an antimony-free Pb-Ca-Sn-based alloy, cured, and dried to obtain an unformed negative electrode plate having a width of 100 mm, a height of 110 mm, and a thickness of 1.3 m. The amounts of carbon black, barium sulfate, lignin, and synthetic resin fiber were respectively adjusted to 0.3% by mass, 2.1% by mass, 0.1% by mass, and 0.1% by mass when measured in the fully charged state of the formed negative electrode plate.

(2) Production of Positive Electrode Plate

Lead oxide, a reinforcing material (synthetic resin fiber), water, and sulfuric acid were mixed to prepare a positive electrode paste. The positive electrode paste was filled in a mesh part of an expanded grid made of an antimony-free Pb-Ca-Sn-based alloy, cured, and dried to obtain an unformed positive electrode plate having a width of 100 mm, a height of 110 mm, and a thickness of 1.6 mm.

(3) Separator

A resin composition containing 100 parts by mass of polyethylene, 160 parts by mass of silica particles, 80 parts by mass of a paraffin oil as a pore-forming additive, and 2 parts by mass of a penetrant was extrusion-molded into a sheet, and a part of the pore-forming additive was then removed to produce a microporous film in which a pore volume A and a pore surface area B obtained in the procedure described above were values shown in Table 1. Next, each sheet-shaped microporous film was folded in half to form a bag, and a welded part was formed in each of end parts to obtain a bag-shaped separator as shown in Fig. 1.

The composition of the resin composition containing polyethylene, silica particles, a pore-forming additive, and a penetrant can be optionally changed depending on the design and production conditions of the separator, and/or the usage of the lead-acid battery, and the like. The content of Na in the separator, the amount of the penetrant, and/or the amount of the pore-forming additive removed, and the like are/is adjusted as necessary.

On the outer surface of the bag-shaped separator, a plurality of stripe-shaped main ribs and mini ribs having protrusion heights of 0.5 mm and 0.18 mm were provided. A pitch of the main ribs was set to 9.8 mm, and a pitch of the mini ribs was set to 1 mm. The total thickness of the separator was set to 0.8 mm. The content of the silica particles in the separator was 60% by mass. The total thickness of the separator, the protruding height of the ribs, the pitch of the ribs, and the content of the silica particles are values obtained for the separator before the production of the lead-acid battery, but these are almost the same as values measured in the procedure described above for the separator taken out from the produced lead-acid battery.

(4) Production of Lead-Acid Battery

Each of the unformed negative electrode plates was housed in a bag-shaped separator, and an element was formed by seven unformed negative electrode plates and six unformed positive electrode plates per cell. Ears of the positive electrode plates and ears of the negative electrode plates were respectively welded to a positive electrode shelf part and a negative electrode shelf part by a cast-on strap (COS) method. The element was inserted into a polypropylene container, and an electrolyte solution was injected into the polypropylene container. Formation was performed in the container, and flooded-type lead-acid batteries A1 to A12 and R1 to R14 having a rated voltage of 12 V and a rated capacity of 30 Ah (5-hour rate capacity (capacity when discharged at a current of 1/5 of the numerical value described in the rated capacity) were assembled. In the container, six elements are connected in series.

The electrolyte solution used was an aqueous sulfuric acid solution in which aluminum sulfate was dissolved. The specific gravity of the electrolyte solution after formation at 20°C was 1.285, and the concentration of Al ions was 0.2% by mass.

[Evaluation 1: Startability of Lead-Acid Battery]

In the procedure described above, a terminal voltage (V) after 5 seconds from the start of discharge of each lead-acid battery was obtained.

[Evaluation 2: High-Temperature Overcharge Life]

The number of life cycles in the high-temperature overcharge durability test of each lead-acid battery was measured in the procedure described above.

[Evaluation 3: Content of Oil in Separator]

The content of the oil in the separator taken out from the produced lead-acid battery was obtained in the procedure described above.

[Evaluation 4: Log Differential Pore Volume Distribution]

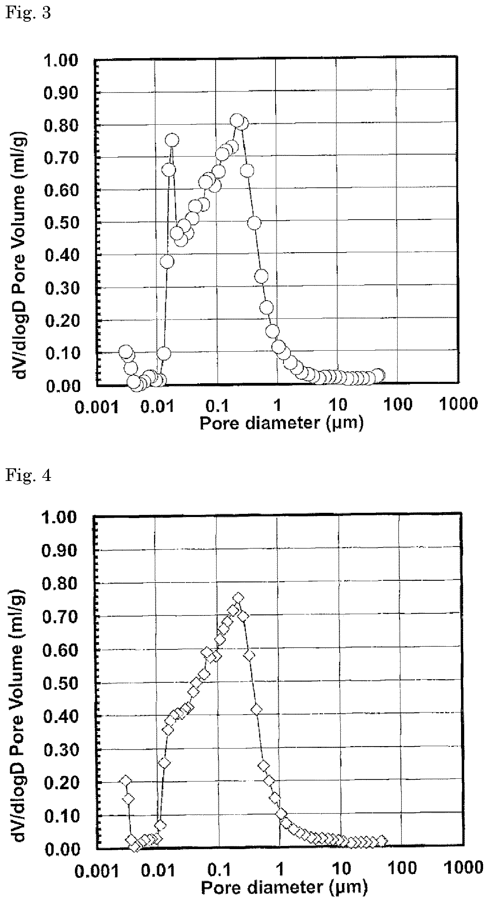

The Log differential pore volume distribution of the separator of the battery A7 was obtained in the procedure described above. The results are shown in Fig. 3 (relationship between Log differential pore volume (dV/dlogD) and pore diameter). In the same manner, the Log differential pore volume distribution of the separator of the battery R4 was obtained. The results are shown in Fig. 4.

The results of the evaluations 1 to 3 are shown in Table 1. Table 1 also describes the product C of the pore volume A and the pore surface area B.

[Table 1]

|  | Content of oil [% by mass] | Pore volume A [$cm^3/g$] | Pore surface area B [$cm^2/g$] | Product C (= A × B) | Startability [v] | High-temperature overcharge life [number of cycles] |
|---|---|---|---|---|---|---|
| R1 | 18.0 | 0.75 | 60 | 45 | 9.6 | 6720 |
| R2 | 18.0 | 0.75 | 65 | 49 | 9.0 | 7200 |
| R3 | 18.0 | 0.75 | 115 | as | 9.4 | 4320 |
| R4 | 17.0 | 1.00 | 60 | 60 | 9.4 | 7680 |
| R5 | 17.0 | 1.00 | 65 | 65 | 9.6 | 7200 |
| R6 | 17.0 | 1.00 | 120 | 120 | 9.8 | 4320 |
| R7 | 14.0 | 1.55 | 60 | 93 | 9.4 | 6720 |
| R8 | 13.0 | 1.55 | 120 | 186 | 10.2 | 4320 |
| R9 | 12.0 | 1.59 | 115 | 183 | 10.5 | 2880 |
| R10 | 12.0 | 1.59 | 65 | 103 | 10.2 | 3840 |
| R11 | 12.2 | 1.59 | 116 | 184 | 10.8 | 4320 |
| R12 | 11.5 | 1.60 | 58 | 93 | 10.8 | 2880 |
| R13 | 11.5 | 1.60 | 60 | 96 | 10.8 | 3360 |
| R14 | 12.0 | 1.60 | 120 | 192 | 10.8 | 3840 |
| A1 | 17.5 | 0.80 | 115 | 92 | 10.3 | 5760 |
| A2 | 17.0 | 1.00 | 116 | 116 | 10.4 | 6240 |
| A3 | 16.4 | 1.08 | 100 | 108 | 10.5 | 6240 |
| A4 | 16.4 | 1.08 | 111 | 120 | 10.5 | 6720 |
| A5 | 16.4 | 1.08 | 116 | 125 | 10.6 | 6720 |
| A6 | 16.2 | 1.10 | 87 | 96 | 10.6 | 6240 |
| A7 | 16.2 | 1.10 | 116 | 128 | 10.7 | 6720 |
| A8 | 14.0 | 1.55 | 65 | 101 | 10.6 | 6240 |
| A9 | 14.0 | 1.55 | 80 | 124 | 10.6 | 6720 |

(continued)

|  | Content of oil [% by mass] | Pore volume A [$cm^3$/g] | Pore surface area B [$cm^2$/g] | Product C (= A × B) | Startability [v] | High-temperature overcharge life [number of cycles] |
|---|---|---|---|---|---|---|
| A10 | 14.0 | 1.55 | 84 | 130 | 10.7 | 6720 |
| A11 | 13.5 | 1.55 | 100 | 155 | 10.8 | 7200 |
| A12 | 13.0 | 1.55 | 115 | 178 | 10.9 | 6720 |

As shown in Table 1, in the lead-acid battery A having the pore volume A of 0.80 $cm^3$/g or more and 1.55 $cm^3$/g or less, the pore surface area B of 65 $cm^2$/g or more and 116 $cm^2$/g or less, and the product C of 92 or more and 180 or less, the startability of the lead-acid battery is high (that is, the resistance of the separator is low), and an excellent high-temperature overcharge life can be secured. Meanwhile, in the lead-acid battery R in which any of the pore volume A, the pore surface area B, and the product C is out of the above range, both high startability and an excellent high-temperature overcharge life cannot be achieved. When C was less than 92, the startability was low even if A and B were within the above ranges. This is considered to be because the diffusibility of the electrolyte solution is insufficient, which makes it difficult to reduce the resistance of the separator. When C exceeds 178, the high-temperature overcharge life is shortened. When B exceeds 116 $cm^2$/g even if C is within the above range, the high-temperature overcharge life is shortened. These are considered to be due to the fact that the diffusibility of the electrolyte solution becomes too high, which causes remarkable oxidative deterioration of the separator. When B is less than 65 $cm^2$/g even if C is within the above range, the startability deteriorates. This is considered to be due to the fact that the low diffusibility of the electrolyte solution in the separator causes increased resistance of the separator. When A is less than 0.80 $cm^3$/g, the startability deteriorates. This is considered to be because the low diffusibility of the electrolyte solution in the separator causes increased resistance of the separator. If A exceeds 1.55 $cm^3$/g, the high-temperature overcharge life is shortened. This is considered to be because the physical strength of the separator is weakened, which causes the separator to be damaged during the high-temperature overcharge life.

The reason why both the high startability and the excellent high-temperature overcharge life can be achieved when C is within the above range is considered to be that the pore structure of the separator is optimized. As shown in Fig. 3, when C is within the above range, a peak peculiar to a region having a pore diameter of 0.03 μm or less (preferably less than 0.03 μm) is obtained in the Log differential pore volume distribution of the separator. Meanwhile, when C is out of the above range, such a peak can hardly be confirmed. As described above, when C is within the above range, many pores having a small pore diameter are formed, whereby it is considered that an excellent high-temperature overcharge life can be secured while the low resistance of the separator is secured. For the lead-acid battery A10 and the lead-acid battery R7, the pore volume A1 of the first pores of the separator, and the ratio of the pore volume A1 to the pore volume A were obtained in the procedure described above. As a result, in the separator of the lead-acid battery R7, the pore volume A1 was 0.19 $cm^3$/g, and the ratio of the pore volume A1 to the pore volume A was 20%. Meanwhile, in the separator of the lead-acid battery A10, the pore volume A1 is 0.24 $cm^3$/g, and the ratio of the pore volume A1 to the pore volume A is 22%, both of which are more than those of the lead-acid battery R7. The difference between the numerical values is considered to largely affect the resistance of the separator and the high-temperature overcharge life of the lead-acid battery. The numerical values of the pore volume A1 and the ratio thereof are values obtained with pores having a pore diameter of less than 0.03 μm as the first pores.

INDUSTRIAL APPLICABILITY

The separator for lead-acid battery according to the present invention can be applied to valve regulated and flooded-type lead-acid batteries. For example, the separator for lead-acid battery can be suitably utilized as a power source for starting vehicles (an automobile and a motorcycle and the like) and a power source for an industrial power storage apparatus such as an electric vehicle (a forklift and the like).

DESCRIPTION OF REFERENCE SIGNS

1: lead-acid battery
2: negative electrode plate
3: positive electrode plate

4: separator
5: positive electrode shelf part
6: negative electrode shelf part
7: positive pole
8: through-connector
9: negative pole
11: element
12: container
13: partition
14: cell chamber
15: lid
16: negative electrode terminal
17: positive electrode terminal
18: vent plug
100: separator
101: crease
102: base part
104a: main rib
104b: mini rib
106: main part
108a, 108b: end part
109a, 109b: welded part

**Claims**

1. A lead-acid battery comprising:

   a positive electrode plate;
   a negative electrode plate; and
   a separator interposed between the positive electrode plate and the negative electrode plate,
   wherein:

   the separator contains a polyolefin and an oil;
   the separator has a pore volume A of 0.80 $cm^3/g$ or more and 1.55 $cm^3/g$ or less and a pore surface area B of 65 $cm^2/g$ or more and 116 $cm^2/g$ or less; and
   a product C of the pore volume A and the pore surface area B is 92 or more and 178 or less;
   the pore volume and the pore surface area being measured by the method described in paragraphs [0016], [0018] and [0019] of the description.

2. The lead-acid battery according to claim 1,
   wherein:

   the separator contains first pores having a pore diameter of 0.03 $\mu$m or less; and
   the first pores have a pore volume of 0.20 $cm^3/g$ or more.

3. The lead-acid battery according to claim 2, wherein a ratio of the pore volume of the first pores to the pore volume A is 21% or more.

4. The lead-acid battery according to any one of claims 1 to 3, wherein a content of the oil in the separator is 13% by mass or more;
   the content of the oil being measured by the method described in paragraph [0024] of the description.

5. The lead-acid battery according to any one of claims 1 to 4, wherein the separator contains inorganic particles.

6. Use of the lead-acid battery according to any one of claims 1 to 5 for starting a vehicle.

**Patentansprüche**

1. Bleiakkumulator, umfassend:

   eine Positivelektrodenplatte;
   eine Negativelektrodenplatte; und
   einen Separator, der zwischen der Positivelektrodenplatte und der Negativelektrodenplatte eingefügt ist,
   wobei:

   der Separator ein Polyolefin und ein Öl umfasst;
   der Separator ein Porenvolumen A von 0,80 cm$^3$/g oder mehr und 1,55 cm$^3$/g oder weniger und eine Porenoberflächengröße B von 0,65 cm$^2$/g oder mehr und 116 cm$^2$/g oder weniger aufweist; und
   ein Produkt C aus dem Porenvolumen A und der Porenoberflächengröße B 92 oder mehr und 178 oder weniger beträgt;
   das Porenvolumen und die Porenoberflächengröße mit dem in den Absätzen [0016], [0018] und [0019] der Beschreibung beschriebenen Verfahren gemessen werden.

2. Bleiakkumulator nach Anspruch 1,
   wobei:

   der Separator erste Poren mit einem Porendurchmesser von 0,03 μm oder weniger umfasst; und
   die ersten Poren ein Porenvolumen von 0,20 cm$^3$/g oder mehr aufweisen.

3. Bleiakkumulator nach Anspruch 2, wobei ein Anteil des Porenvolumens der ersten Poren am Porenvolumen A 21 % oder mehr beträgt.

4. Bleiakkumulator nach einem der Ansprüche 1 bis 3, wobei ein Anteil des Öls in dem Separator 13 Masse-% oder mehr beträgt;
   wobei der Anteil des Öls mit dem in Absatz [0024] der Beschreibung beschriebenen Verfahren gemessen wird.

5. Bleiakkumulator nach einem der Ansprüche 1 bis 4, wobei der Separator anorganische Partikel umfasst.

6. Verwendung des Bleiakkumulators nach einem der Ansprüche 1 bis 5 zum Starten eines Fahrzeugs.

**Revendications**

1. Batterie au plomb-acide comprenant :

   une plaque d'électrode positive ;
   une plaque d'électrode négative ; et
   un séparateur interposé entre la plaque d'électrode positive et la plaque d'électrode négative, :

   le séparateur contenant une polyoléfine et une huile ;
   le séparateur ayant un volume de pore A de 0,80 cm$^3$/g ou plus et 1,55 cm$^3$/g ou moins et une surface de pore B de 65 cm$^2$/g ou plus et 116 cm$^2$/g ou moins ; et
   un produit C du volume de pore A et de la surface de pore B étant de 92 ou plus et 178 ou moins ;
   le volume de pore et la surface de pore étant mesurés par le procédé décrit dans les paragraphes [0016], [0018] et [0019] de la description.

2. Batterie au plomb-acide selon la revendication 1,
   dans laquelle :

   le séparateur contient des premiers pores ayant un diamètre de pore de 0,03 μm ou moins ; et
   les premiers pores ayant un volume de pore de 0,20 cm$^3$/g ou plus.

3. Batterie au plomb-acide selon la revendication 2, dans laquelle un rapport du volume de pore des premiers pores au volume de pore A est de 21 % ou plus.

**4.** Batterie au plomb-acide selon l'une quelconque des revendications 1 à 3, dans laquelle une teneur de l'huile dans le séparateur est de 13 % en masse ou plus ;
la teneur en huile étant mesurée par le procédé décrit dans le paragraphe [0024] de la description.

**5.** Batterie au plomb-acide selon l'une quelconque des revendications 1 à 4, dans laquelle le séparateur contient des particules inorganiques.

**6.** Utilisation de la batterie au plomb-acide selon l'une quelconque des revendications 1 à 5 pour démarrer un véhicule.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013211115 A
- JP 2005268006 A

- JP 2006114313 A